# EUROPÄISCHE PATENTSCHRIFT

(11) **EP 1 148 264 B1**
(45) Veröffentlichungstag und Bekanntmachung des Hinweises auf die Patenterteilung: **11.12.2002**
(21) Anmeldenummer: 01108006.6
(22) Anmeldetag: 29.03.2001
(51) Int. Cl.: F16D 41/30

(54) **Freilaufkupplung mit zwangsgesteuerter Sperrklinke**
Freewheel with forcibly controlled pawl
Roue libre avec cliquet à action commandée

(30) Priorität: 22.04.2000 DE 10019989
(43) Veröffentlichungstag der Anmeldung: 24.10.2001
(73) Patentinhaber: SRAM Deutschland GmbH, 97404 Schweinfurt (DE)
(72) Erfinder: Kröger, Peter, 97424 Schweinfurt (DE)

(56) Entgegenhaltungen:
- AT-B- 308 559
- DE-A- 3 521 145
- US-A- 2 844 050
- US-A- 5 540 456

## Beschreibung

Die Erfindung betrifft eine Freilaufkupplung nach den Oberbegriff des Anspruchs 1.

Derartige Freilaufkupplungen werden beispielsweise in eine Nabe eines Laufrades eines Fahrrades eingesetzt und dienen in der Regel dazu, einen Formschluß zwischen den Kupplungsteilen in Abhängigkeit von der Drehrichtung des angetriebenen Kupplungsteils zu erzeugen bzw. den Formschluß zu lösen.

Eine Freilaufkupplung ist beispielsweise aus der EP 0 787 922 A2 bekannt. Diese Freilaufkupplung hat zwei einander radial umschließende Kupplungsteile. Auf dem radial inneren Kupplungsteil sind mehrere, von Federelementen nach radial auβen vorgespannte Sperrklinken angeordnet. Ein Kranz Ausnehmungen ist in dem radial äußeren Kupplungsteil angeordnet. Die Sperrklinken lassen sich von einem Steuermechanismus mit einer gegen die Sperrklinke bewegbaren Nase nach radial innen hin aus den Ausnehmungen heraus vorspannen. Diese Gestaltung des Steuermechanismus hat den Vorteil, daß die Sperrklinken in der Drehrichtung, in der kein Formschluß zwischen den Kupplungsteilen erzeugt werden soll, von den Ausnehmungen entfernt sind. Hierdurch werden störende Geräusche vermieden und ein Verschleiß der Ausnehmungen und der Sperrklinken besonders gering gehalten. Nachteilig bei der bekannten Freilaufkupplung ist jedoch, daß die Federelemente aufwendig zu montierende und zu halternde Bauteile sind. Weiterhin werden sehr große Kräfte zur Bewegung der Sperrklinken gegen die Kraft der Federelemente benötigt. Diese Gestaltung führt dazu, daß meist nur eine geringe Anzahl von Sperrklinken eingesetzt wird. Die Sperrklinken und die Ausnehmungen erfordern daher eine besonders hohe Festigkeit und werden daher aus Stahl gefertigt.

Durch die DE AS 1 575 963 ist eine Freilaufkupplung bekannt geworden, bei der das Steuerelement durch Reibungskräfte zwischen einer Stellung, in der sich die Sperrklinken innerhalb der Ausnehmungen befinden, und einer Stellung, in der die Sperrklinken aus den Ausnehmungen heraus bewegt sind, bewegbar ist. Sämtliche Sperrklinken werden von einer einzigen Feder radial nach außen in Richtung der Ausnehmungen vorgespannt. Nachteilig ist hier ebenfalls die aufwendige Montage des Federelements und die hohen Kräfte zur Bewegung der Sperrklinken gegen die Federelemente.

In US-A-2 844 050 ist eine Freilaufkupplung nach dem Oberbegriff des Anspruchs 1 offenbart, in der Klinken zur Umschaltung zwischen Drehmitnahme und Überholen zwischen den beiden Kupplungsteilen gesteuert werden. Die Klinken greifen dazu bei Drehmitnahme in die Ausnehmungen auf dem anderen Kupplungsteil ein, oder sie werden in eine Lage verschwenkt, in der ein Eingriff in die Ausnehmungen nicht möglich ist. Die Steuerung der Klinken zwischen ihren verschiedenen Lagen erfolgt durch eine Steuerhülse, die durch die Wirkung einer Reibungskraft der Bewegung des die Ausnehmungen tragenden Kupplungsteiles folgt.

Jeder der Klinken wird bei einer Drehung entgegen der Mitnahmerichtung durch eine Abgleitschräge an der Steuerhülse aus den Ausnehmungen heraus bewegt. Bei einer Drehung in Mitnahmerichtung wird die Steuerhülse relativ zu den Klinken verdreht, bis die Klinken sich im Bereich einer Öffnung an der Steuerhülse zu liegen kommen. Jede der Klinken wird aktiv durch einen Einsteuervorsprung an dieser Öffnung in Richtung der Ausnehmung bewegt, wobei sie durch die Öffnung hindurchtritt und zum Eingriff an eine Ausnehmung gelangt.

Der Erfindung liegt das Problem zugrunde, eine Freilaufkupplung der eingangs genannten Art so zu gestalten, daß sie besonders einfach zu montieren ist und daß die Bewegung der Sperrklinken besonders geringe Kräfte erfordert.

Dieses Problem wird erfindungsgemäß durch die Merkmale der Anspruchs 1 gelöst.

Durch diese Gestaltung benötigt die erfindungsgemäße Freilaufkupplung keine Federelemente zur Bewegung der Sperrklinken. Daher sind keine aufwendigen Halterungen und Führungen für die Federelemente erforderlich. Die erfindungsgemäße Freilaufkupplung läßt sich hierdurch besonders einfach montieren und zudem kostengünstig herstellen. Weiterhin lassen sich durch den Wegfall der Federelemente die Sperrklinken im Vergleich zu der bekannten Freilaufkupplung mit besonders geringen Kräften bewegen. Diese geringe Kraft zur Bewegung der Sperrklinken ermöglicht es, eine große Anzahl von Sperrklinken einzusetzen. Bei einem Formschluß zwischen den Kupplungsteilen werden hierdurch die auftretenden Kräfte auf die große Anzahl der Sperrklinken und der Begrenzungen der Ausnehmungen verteilt. Im günstigsten Fall können deshalb die Sperrklinken und die Ausnehmungen aus einem leichten Material mit einer im Vergleich zu Stahl relativ geringen Festigkeit, wie beispielsweise Aluminium oder Magnesium und deren Legierungen gefertigt werden.

Die Ansteuerung der Sperrklinken gestaltet sich besonders einfach, weil zumindest eines der Steuerelemente mit einem Hilfsklinkenelement verbunden ist und das Hilfsklinkenelement bei einer vorgesehenen Relativ-Drehrichtung der Kupplungsteile zueinander zum Einrasten in eine Ausnehmung vorgesehen ist.

Nachteilig bei der bekannten Freilaufkupplung ist neben den hohen Stellkräften für die Sperrklinken die sehr große Anzahl von Bauteilen und deren aufwendige Montage. Hierdurch gestaltet sich die Fertigung der bekannten Freilaufkupplung sehr kostenintensiv. Die Fertigung der erfindungsgemäßen Freilaufkupplung gestaltet sich besonders einfach, wenn die Steuerelemente und das Hilfsklinkenelement auf einem gegenüber den Kupplungsteilen geringfügig bewegbaren Stellring angeordnet sind. Im einfachsten Fall lassen sich die Bauteile bei der Montage einfach zusammenstecken. Ein weiterer Vorteil dieser Gestaltung besteht darin, daß sich der Stellring und die Sperrklinken zu einer vormontierbaren Einheit zusammenfassen lassen, welche sich bei der Endmontage einfach mit den Kupplungsteilen zusammensetzen läßt.

Die Steuerung der Sperrklinken gestaltet sich gemäß einer anderen vorteilhaften Weiterbildung der Erfindung besonders einfach, wenn das Hilfsklinkenelement in die Ausnehmungen vorgespannt ist. Da für die Bewegung der Sperrklinken nur geringe Kräfte erforderlich sind, lassen sich eine Vielzahl von Sperrklinken mit einem oder zwei Hilfsklinkenelementen bewegen. Hierdurch werden störende Geräusche besonders gering gehalten.

Geräusche bei einer Relativbewegung der Kupplungsteile zueinander lassen sich gemäß einer anderen vorteilhaften Weiterbildung der Erfindung besonders gering halten, wenn das Hilfsfriktionselement gegen das die Ausnehmungen aufweisende Kupplungsteil vorspannbar ist.

Das Hilfsklinkenelement wird gemäß einer anderen vorteilhaften Weiterbildung der Erfindung zuverlässig in seiner vorgesehenen Lage gehalten, wenn das Hilfsklinkenelement auf einem von dem Stellring abstehenden Federelement angeordnet ist. Weiterhin trägt diese Gestaltung zur weiteren Vereinfachung der Montage der erfindungsgemäßen Freilaufkupplung bei.

Das Hilfsklinkenelement überträgt gemäß einer anderen vorteilhaften Weiterbildung der Erfindung in einer Relativ-Drehrichtung der Kupplungsteile zueinander geringe Kräfte und in der entgegengesetzten Relativ-Drehrichtung sehr große Kräfte, wenn das Federelement in einem geringen Winkel zu der Tangentialen des die Ausnehmungen aufweisenden Kupplungsteils geneigt angeordnet ist. Dies ermöglicht eine zuverlässige Bewegung der Sperrklinken und geringe Reibungsenergie bei zwischen den Kupplungsteilen gelöstem Formschluß.

Die erfindungsgemäße Freilaufkupplung gestaltet sich besonders kompakt, wenn die Ausnehmungen auf dem radial inneren Kupplungsteil angeordnet sind.

Bekannte Freilaufkupplungen lassen sich gemäß einer anderen vorteilhaften Weiterbildung der Erfindung mit geringem konstruktiven Aufwand zu der erfindungsgemäβen Freilaufkupplung umrüsten, wenn die Ausnehmungen auf dem radial äußeren Kupplungsteil angeordnet sind.

Die erfindungsgemäße Freilaufkupplung läßt sich konstruktiv einfach als Axialfreilauf gestalten, wenn die Sperrklinke in axialer Richtung bewegbar ist und wenn die Ausnehmungen und die Sperrklinke einander axial gegenüberstehen.

Die als Radialfreilauf gestaltete Freilaufkupplung erfordert in radialer Richtung besonders geringe Abmessungen, wenn der Stellring axial neben dem die Ausnehmungen und die Sperrklinke aufweisenden Bereich der Kupplungsteile angeordnet ist und wenn die Steuerelemente in den die Ausnehmungen und die Sperrklinke aufweisenden Bereich der Kupplungsteile hineinragen.

Zur weiteren Verringerung der Anzahl der Bauteile der erfindungsgemäßen Freilaufkupplung trägt es bei, wenn das Hilfsklinkenelement einteilig mit dem von dem Stellring abstehenden Federelement gestaltet ist.

Die Steuerelemente könnten beispielsweise über Kniehebel mit der jeweiligen Sperrklinke zusammenwirken. Die Steuerelemente und die Sperrklinke sind jedoch gemäß einer anderen vorteilhaften Weiterbildung der Erfindung besonders einfach aufgebaut und lassen sich besonders einfach fertigen, wenn die Sperrklinke zwei Führungsschrägen für die Steuerelemente aufweist.

Zur weiteren Verringerung der zu fertigenden Bauteile trägt es gemäß einer anderen vorteilhaften Weiterbildung der Erfindung bei, wenn die Steuerelemente als gemeinsames, in einer Führungsnut der Sperrklinke bewegbares Bauteil gestaltet sind.

Die Erfindung läßt zahlreiche Ausführungsformen zu. Zur weiteren Verdeutlichung ihres Grundprinzips sind zwei davon in der Zeichnung dargestellt und werden nachfolgend beschrieben. Diese zeigt in
- Fig. 1: einen Teilschnitt durch die Nabe für ein Fahrrad mit einer erfindungsgemäßen Freilaufkupplung,
- Fig.2: einen vergrößerten Halbschnitt durch die Nabe aus Figur 1 entlang der Linie II - II,
- Fig.3: einen Stellring aus Figur 2 in einer perspektivischen Darstellung,
- Fig.4: eine perspektivische Darstellung eines inneren Kupplungsteils und eines Stellrings einer anderen, Freilaufkupplung, die nicht gemäß der Erfindung ist.
- Fig.5: einen Halbschnitt durch das innere Kupplungsteil aus Figur 4.

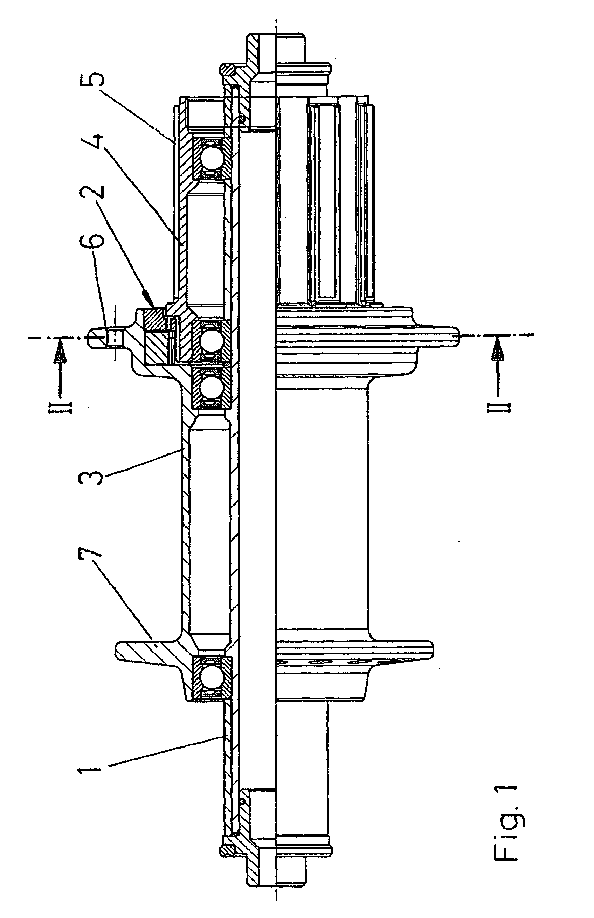

Figur 1 zeigt eine Nabe für ein Fahrrad mit einer Achse 1 und mit einer Freilaufkupplung 2. Die Freilaufkupplung 2 dient zur Lösung oder Erzeugung eines Formschlusses zwischen zwei auf der Achse 1 gelagerten Kupplungsteilen 3, 4 in Abhängigkeit von deren Relativ-Drehrichtung zueinander. Eines der Kupplungsteile 3 ist als Nabenhülse ausgebildet, während das andere Kupplungsteil 4 einteilig mit einem Antreiber 5 gefertigt ist. Das als Nabenhülse ausgebildete Kupplungsteil 3 trägt zwei Speichenflansche 6, 7. In ihren aneinandergrenzenden Bereichen umschließen sich die Kupplungsteile 3, 4 einander konzentrisch.

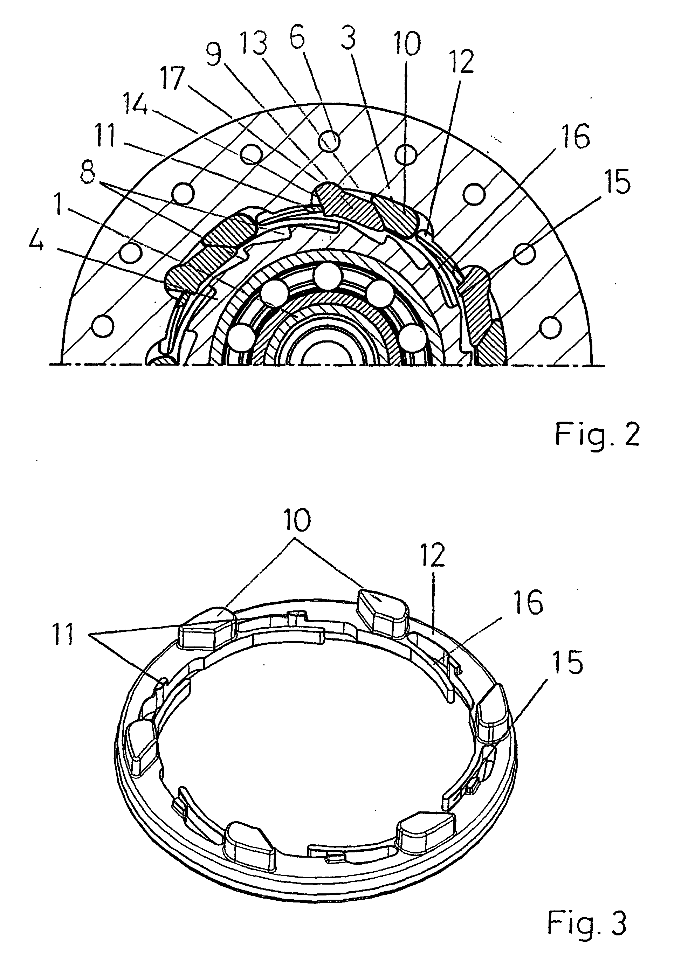

Figur 2 zeigt vergrößert einen Halbschnitt durch die Freilaufkupplung 2 aus Figur 1 entlang der Linie II - II. Das radial innere Kupplungsteil 4 weist einen Kranz Ausnehmungen 8 auf. Das radial äußere Kupplungsteil 3 lagert mehrere Sperrklinken 9. An den Enden der Sperrklinken 9 sind jeweils zwei Steuerelemente 10, 11 angeordnet. Die Steuerelemente 10, 11 sind jeweils auf einem die Achse 1 konzentrisch umschließenden Stellring 12 angeordnet und liegen an Führungsschrägen 13, 14 der Sperrklinken 9 an. Der Stellring 12 läßt sich bei der hier als Radialfreilauf gestalteten Freilaufkupplung 2 gegenüber den Kupplungsteilen 3, 4 geringfügig verdrehen. Einteilig mit dem Stellring 12 sind Hilfsklinkenelemente 15 angeordnet. Die Hilfsklinkenelemente 15 werden von gegenüber der Tangentialen geneigt angeordneten Federelementen 16 jeweils in eine der Ausnehmungen 8 vorgespannt. In der eingezeichneten Stellung werden die Sperrklinken 9 von dem sich im Bereich ihrer Lagerung 17 angeordneten Steuerelementen 11 nach radial außen vorgespannt und behindern die freie Beweglichkeit der Sperrklinken 9 im Fall der Drehung des Kupplungsteils 4 im Uhrzeigersinn relativ zum Kupplungsteil 3. Auf diese Weise wird eine Erzeugung vor Geräuschen durch die Sperrklinke 9 vermieden.

Bei einer Relativdrehung des radial inneren Kupplungsteils 4 gegenüber dem radial äußeren Kupplungsteil 3 im Uhrzeigersinn werden die Hilfsklinkenelemente 15 radial nach außen gedrückt. Damit läßt sich das radial innere Kupplungsteil 4 im Uhrzeigersinn gegenüber dem radial äußeren Kupplungsteil 3 verdrehen. Bei einer Drehung des radial inneren Kupplungsteils 4 gegenüber dem radial äußeren Kupplungsteil 3 entgegen des Uhrzeigersinns stützen sich die Hilfsklinkenelemente 15 an einer der Ausnehmungen 8 ab. Hierdurch wird der Stellring 12 gegenüber dem Kupplungsteil 3 um eine kleine Wegstrecke verdreht. Die an dem freien Ende der Sperrklinken 9 angeordneten Steuerelemente 10 drücken die Sperrklinken 9 radial nach innen in die Ausnehmungen 8 hinein. Dabei stützt sich jede der Sperrklinken 9 im Bereich ihrer Lagerung 17 an dem radial äußeren Kupplungsteil 3 ab. in dieser Relativ-Drehrichtung wird ein Formschluß zwischen den Kupplungsteil 3, 4 erzeugt.

Figur 3 zeigt den Stellring 12 aus Figur 2 in einer perspektivischen Darstellung. Hierbei sind die hervorstehenden Steuerelemente 10, 11 zu erkennen. Die im Bereich der Lagerungen 17 der in Figur 2 dargestellten Sperrklinken 9 angeordneten Steuerelemente 11 sind kleiner als die an dem freien Ende der Sperrklinken 9 angeordneten Steuerelemente 10. Die Anzahl der einteilig mit den Hilfsklinkenelementen 15 und dem Stellring 12 gefertigten Federelemente 16 ist hier so groß wie die Anzahl der für die Freilaufkupplung 2 vorgesehenen Sperrklinken 9. Da für die Bewegung des Stellrings 12 nur sehr kleine Kräfte erforderlich sind, genügt häufig auch eine wesentlich geringere Anzahl von Hilfsklinkenelementen 15.

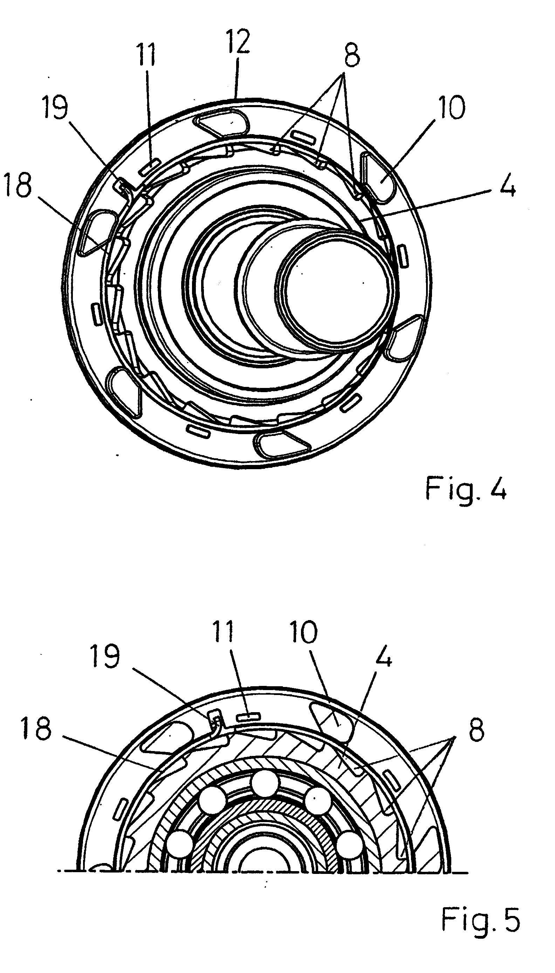

Figur 4 zeigt eine Ausführungsform einer anderen Freilaufkupplung, bei der der Stellring 12 ein Hilfsfriktionselement 18 aufweist. Diese Ausführungsform der Freilaufkupplung ist zur Verdeutlichung in Figur 5 in einem Halbquerschnitt gezeigt. Zur Vereinfachung der Zeichnung sind die in Figur 2 dargestellten Sperrklinken 9 und das radial äußere Kupplungsteil 3 nicht dargestellt. Das Hilfsfriktionselement 18 ist in dem Stellring 12 mit einer Abwinklung 19 befestigt und liegt an einem axial neben den Ausnehmungen 8 des radial inneren Kupplungsteils 4 befindlichen Abschnitt an. Das Hilfsfriktionselement 18 erstreckt sich dabei fast über den gesamten Umfang des radial inneren Kupplungsteils 4 und hat einen vorgesehenen Reibungsbeiwert gegenüber dem radial inneren Kupplungsteil 4.

Bei einer Drehung des radial inneren Kupplungsteils 4 im Uhrzeigersinn wird das Hilfsfriktionselement 18 radial nach außen gedrückt und setzt einer weiteren Drehung nur einen unwesentlichen Widerstand entgegen. Bei einer Drehung des radial inneren Kupplungsteils 4 entgegen des Uhrzeigersinns umschlingt das Hilfsfriktionselement 18 das radial innere Kupplungsteil 4. Der Stellring 12 wird anschließend mitgedreht. Die Bewegung der in Figur 2 dargestellten, an dem radial äußeren Kupplungsteil 3 gelagerten Sperrklinken 9 erfolgt anschließend wie zu Figur 2 beschrieben.

### Bezugszeichenliste

- 1: Achse
- 2: Freilaufkupplung
- 3,4: Kupplungsteil
- 5: Antreiber
- 6,7: Speichenflansch
- 8: Ausnehmung
- 9: Sperrklinke
- 10, 11: Steuerelement
- 12: Stellring
- 13 , 14: Führungsschräge
- 15: Hilfsklinkenelement
- 16: Federelement
- 17: Lagerung
- 18: Hilfsfriktionselement
- 19: Abwinklung

## Patentansprüche

1. Freilaufkupplung mit einem angetriebenen Kupplungsteil (3) und einem treibenden Kupplungsteil (4), mit einer beweglich gehaltenen, sich an einem der Kupplungsteile (3,4) abstützenden Sperrklinke (9) mit auf dem anderen der Kupplungsteile (3, 4) angeordneten Ausnehmungen (8) zur Aufnahme der Sperrklinke (9) und mit einem Steuerelement zur Bewegung der Sperrklinke aus der Ausnehmung (8) heraus in eine von der Ausnehmung (8) entfernte Position im Fall der Drehung des treibenden Kupplungsteiles (4) entgegen der Antriebsdrehrichtung, einem zweiten Steuerelement (10) zur Bewegung der Sperrklinke (9) in die Ausnehmung (8) im Fall der Drehung des antreibenden Kupplungsteiles (4) in Antriebsdrehrichtung,
**dadurch gekennzeichnet,**
**dass** zumindest eines der Steuerelemente (10) mit einem Hilfsklinkenelement (15) in Wirkverbindung steht und daß das Hilfsklinkenelement (15) bei einer Drehung des treibenden Kupplungsteiles (4) gegenüber dem angetriebenen Kupplungsteil (3) in Antriebsdrehrichtung zum Einrasten in eine Ausnehmung (8) vorgesehen ist.

2. Freilaufkupplung nach zumindest einem der vorhergehenden Ansprüche,
**dadurch gekennzeichnet,**
**daß** das Steuerelement(10) und das Hilfsklinkenelement (15) auf einem gegenüber den Kupplungsteilen (3, 4) geringfügig bewegbaren Steliring (12) angeordnet sind.

3. Freilaufkupplung nach zumindest einem der vorhergehenden Ansprüche,
**dadurch gekennzeichnet,**
**daß** das Hilfsklinkenelement (15) in die Ausnehmungen (8) vorgespannt ist.

4. Freilaufkupplung nach zumindest einem der vorhergehenden Ansprüche,
**dadurch gekennzeichnet,**
**daß** das Hilfsklinkenelement (15) auf einem von dem Stellring (12) abstehenden Federelement (16) angeordnet ist.

5. Freilaufkupplung nach zumindest einem der vorhergehenden Ansprüche,
**dadurch gekennzeichnet,**
**daß** das Federelement (16) in einem geringen Winkel zu der Tangentialen des die Ausnehmungen (8) aufweisenden Kupplungsteils (4) geneigt angeordnet ist.

6. Freilaufkupplung nach zumindest einem der vorhergehenden Ansprüche,
**dadurch gekennzeichnet,**
**daß** die Ausnehmungen (8) auf dem radial inneren Kupplungsteil (4) angeordnet sind.

7. Freilaufkupplung nach zumindest einem der vorhergehenden Ansprüche,
**dadurch gekennzeichnet,**
**daß** die Ausnehmungen (8) auf dem radial äußeren Kupplungsteil (3) angeordnet sind.

8. Freilaufkupplung nach zumindest einem der vorhergehenden Ansprüche,
**dadurch gekennzeichnet,**
**daß** die Sperrklinke (9) in axialer Richtung bewegbar ist und daß die Ausnehmungen (8) und die Sperrklinke (9) einander axial gegenüberstehen.

9. Freilaufkupplung nach zumindest einem der vorhergehenden Ansprüche,
**dadurch gekennzeichnet,**
**daß** der Stellring (12) axial neben dem die Ausnehmungen (8) und die Sperrklinke (9) aufweisenden Bereich der Kupplungsteile (3, 4) angeordnet ist und daß die Steuerelemente (10, 11) in den die Ausnehmungen (8) und die Sperrklinke (9) aufweisenden Bereich der Kupplungsteile (3, 4) hineinragen.

10. Freilaufkupplung nach zumindest einem der vorhergehenden Ansprüche,
**dadurch gekennzeichnet,**
**daß** das Hilfsklinkenelement (15) einteilig mit dem von dem Stellring (12) abstehenden Federelement (16) gestaltet ist.

11. Freilaufkupplung nach zumindest einem der vorhergehenden Ansprüche,
**dadurch gekennzeichnet,**
**daß** die Sperrklinke (9) eine Führungsschräge (13) für das Steuerelement (10) aufweist.

12. Freilaufkupplung nach zumindest einem der vorhergehenden Ansprüche,
**dadurch gekennzeichnet,**
**daß** die Führungsschräge (14) für das Steuerelement (11) im Bereich der Lagerung (17) der Sperrklinke (9) angeordnet ist.

13. Freilaufkupplung nach zumindest einem der vorhergehenden Ansprüche,
**dadurch gekennzeichnet,**
**daß** das Steuerelement (11) die Sperrklinke (9) aus der Ausnehmung (8) herausbewegt, um die Sperrklinke in dieser Position zu halten und an einem Eingriff in der Ausnehmung (8) zu hindem.

14. Freilaufkupplung nach zumindest einem der vorhergehenden Ansprüche,
**dadurch gekennzeichnet,**
**daß** die Steuerelemente (10, 11) als gemeinsames, in einer Führungsnut der Sperrklinke (9) bewegbares Bauteil gestaltet sind.

## Claims

1. Freewheel clutch with a driven clutch part (3) and a driving clutch part (4), with a movably held detent pawl (9), which is supported on one of the clutch parts (3, 4), with recesses (8) arranged on the other of the clutch parts (3, 4) to receive the detent pawl (9), and with a control element for moving the detent pawl out of the recess (8) into a position remote from the recess (8) when the driving clutch part (4) rotates counter to the driving direction of rotation, with a second control element (10) for moving the detent pawl (9) into the recess (8) when the driven clutch part (4) rotates in the driving direction of rotation, **characterized in that** at least one of the control elements (10) is in operative connection with an auxiliary pawl element (15), and **in that** the auxiliary pawl element (15) is provided to latch into a recess (8) when the driving clutch part (4) rotates in the driving direction of rotation relative to the driven clutch part (3).

2. Freewheel clutch according to at least one of the preceding claims, **characterized in that** the control element (10) and the auxiliary pawl element (15) are arranged on an actuating ring (12) that can be moved slightly relative to the clutch parts (3, 4).

3. Freewheel clutch according to at least one of the preceding claims, **characterized in that** the auxiliary pawl element (15) is preloaded into the recesses (8).

4. Freewheel clutch according to at least one of the preceding claims, **characterized in that** the auxiliary friction element (15) is arranged on a spring element (16) projecting from the actuating ring (12).

5. Freewheel clutch according to at least one of the preceding claims, **characterized in that** the spring element (16) is arranged at a small angle to a tangent to the clutch part (4) having the recesses (8).

6. Freewheel clutch according to at least one of the preceding claims, **characterized in that** the recesses (8) are arranged on the radially inner clutch part (4).

7. Freewheel clutch according to at least one of the preceding claims, **characterized in that** the recesses (8) are arranged on the radially outer clutch part (3).

8. Freewheel clutch according to at least one of the preceding claims, **characterized in that** the detent pawl (9) is movable in an axial direction and **in that** the recesses (8) and the detent pawl (9) face one another in an axial direction.

9. Freewheel clutch according to at least one of the preceding claims, **characterized in that** the actuating ring (12) is arranged axially adjacent to the area of the clutch parts (3, 4) having the recesses (8) and the detent pawl (9), and **in that** the control elements (10, 11) project into the area of the clutch parts (3, 4) having the recesses (8) and the detent pawl (9).

10. Freewheel clutch according to at least one of the preceding claims, **characterized in that** the auxiliary pawl element (15) is of one-piece design with the spring element (16) projecting from the actuating ring (12).

11. Freewheel clutch according to at least one of the preceding claims, **characterized in that** the detent pawl (9) has a guide bevel (13) for the control element (10).

12. Freewheel clutch according to at least one of the preceding claims, **characterized in that** the guide bevel (14) for the control element (11) is arranged in the area of the support (17) of the detent pawl (9).

13. Freewheel clutch according to at least one of the preceding claims, **characterized in that** the control element (11) moves the detent pawl (9) out of the recess (8) in order to hold the detent pawl in this position and prevent it from engaging in the recess (8).

14. Freewheel clutch according to at least one of the preceding claims, **characterized in that** the control elements (10, 11) are designed as parts of a common component that can be moved in a guide groove in the detent pawl (9).

## Revendications

1. Accouplement à roue libre avec une pièce d'accouplement menée (3) et une pièce d'accouplement menante (4), avec un cliquet d'arrêt (9) maintenu de façon mobile et prenant appui sur une des pièces d'accouplement (3, 4), avec des creux (8) disposés sur l'autre des pièces d'accouplement (3, 4) pour recevoir le cliquet d'arrêt (9) et avec un élément de commande pour déplacer le cliquet d'arrêt hors du creux (8) dans une position écartée du creux (8) dans le cas de la rotation de la pièce d'accouplement menante (4) dans le sens de rotation contraire au sens d'entraînement, un deuxième élément de commande (10) pour déplacer le cliquet d'arrêt (9) dans le creux (8) dans le cas d'une rotation de la pièce d'accouplement menante (4) dans le sens de rotation de l'entraînement, **caractérisé en ce qu'**au moins un des éléments de commande (10) est en liaison active avec un élément de cliquet auxiliaire (15) et **en ce que** l'élément de cliquet auxiliaire (15) est prévu pour s'accrocher dans un creux (8) lors d'une rotation de la pièce d'accouplement menante (4) par rapport à la pièce d'accouplement menée (3) dans le sens de rotation de l'entraînement.

2. Accouplement à roue libre suivant la revendication 1, **caractérisé en ce que** l'élément de commande (10) et l'élément de cliquet auxiliaire (15) sont disposés sur une bague de réglage (12) légèrement mobile par rapport aux pièces d'accouplement (3, 4).

3. Accouplement à roue libre suivant au moins une des revendications précédentes, **caractérisé en ce que** l'élément de cliquet auxiliaire (15) est précontraint dans les creux (8).

4. Accouplement à roue libre suivant au moins une des revendications précédentes, **caractérisé en ce que** l'élément de cliquet auxiliaire (15) est disposé sur un élément de ressort (16) dressé sur la bague de réglage (12).

5. Accouplement à roue libre suivant au moins une des revendications précédentes, **caractérisé en ce que** l'élément de ressort (16) est disposé avec une inclinaison sous un angle faible par rapport à la tangente à la pièce d'accouplement (4) présentant les creux (8).

6. Accouplement à roue libre suivant au moins une des revendications précédentes, **caractérisé en ce que** les creux (8) sont disposés sur la pièce d'accouplement (4) radialement intérieure.

7. Accouplement à roue libre suivant au moins une des revendications précédentes, **caractérisé en ce que** les creux (8) sont disposés sur la pièce d'accouplement (3) radialement extérieure.

8. Accouplement à roue libre suivant au moins une des revendications précédentes, **caractérisé en ce que** le cliquet d'arrêt (9) est mobile en direction axiale et **en ce que** les creux (8) et le cliquet d'arrêt (9) sont placés axialement l'un en face de l'autre.

9. Accouplement à roue libre suivant au moins une des revendications précédentes, **caractérisé en ce que** la bague de réglage (12) est disposée axialement à côté de la région des pièces d'accouplement (3, 4) présentant les creux (8) et le cliquet d'arrêt (9) et **en ce que** les éléments de commande (10, 11) pénètrent dans la région des pièces d'accouplement (3, 4) présentant les creux (8) et le cliquet d'arrêt (9).

10. Accouplement à roue libre suivant au moins une des revendications précédentes, **caractérisé en ce que** l'élément de cliquet auxiliaire (15) est formé d'un seul tenant avec l'élément de ressort (16) dressé sur la bague de réglage (12).

11. Accouplement à roue libre suivant au moins une des revendications précédentes, **caractérisé en ce que** le cliquet d'arrêt (9) présente une rampe de guidage (13) pour l'élément de commande (10).

12. Accouplement à roue libre suivant au moins une des revendications précédentes, **caractérisé en ce que** la rampe de guidage (14) pour l'élément de commande (11) est disposée dans la région de l'appui (17) du cliquet d'arrêt (9).

13. Accouplement à roue libre suivant au moins une des revendications précédentes, **caractérisé en ce que** l'élément de commande (11) déplace le cliquet d'arrêt (9) hors du creux (8), afin de maintenir le cliquet d'arrêt dans cette position et d'empêcher son engagement dans le creux (8).

14. Accouplement à roue libre suivant au moins une des revendications précédentes, **caractérisé en ce que** les éléments de commande (10, 11) constituent une pièce commune, mobile dans une rainure de guidage du cliquet d'arrêt (9).
